# EUROPEAN PATENT APPLICATION

(11) **EP 4 507 106 A1**
(43) Date of publication of application: **12.02.2025**
(21) Application number: 24785017.5
(22) Date of filing: 19.01.2024
(51) Int. Cl.: H01M 50/446, H01M 50/449, H01M 50/431, H01M 50/411, H01M 10/052

(54) **SEPARATOR FOR ELECTROCHEMICAL DEVICE AND ELECTROCHEMICAL DEVICE COMPRISING SAME**

(30) Priority: 04.04.2023 KR 20230044174
(71) Applicant: LG Energy Solution, Ltd., Seoul 07335 (KR)
(72) Inventor: BANG, Ji Hyun, Daejeon 34122 (KR); JEONG, So Mi, Daejeon 34122 (KR); YOON, Yeo Ju, Daejeon 34122 (KR); KIM, Seong Jun, Daejeon 34122 (KR); KIM, Yeong Ha, Daejeon 34122 (KR)
(74) Representative: Hoffmann Eitle
(86) International application number: PCT/KR2024/000983
(87) International publication number: WO 2024/210306

(57) **Abstract**

The present invention provides a separator for an electrochemical device includes a porous polymer substrate, and a porous coating layer including a first polymer binder and inorganic particles and formed on at least one surface of the porous polymer substrate, wherein the first polymer binder and the inorganic particles each have different ligands introduced thereto.

## Description

### Technical Field

This application is based on and claims priority from Korean Patent Application No. 10-2023-0044174, filed on April 4, 2023, with the Korean Intellectual Property Office, the disclosure of which is incorporated herein in its entirety by reference.

The present disclosure relates to a separator for an electrochemical device and an electrochemical device including the same.

### Background Art

Electrochemical devices convert chemical energy into electrical energy using electrochemical reactions, and lithium secondary (rechargeable) batteries have been widely used in recent years due to their high energy density and voltage, long cycle life, and versatility in a variety of applications.

The lithium secondary battery may include an electrode assembly manufactured with a positive electrode, a negative electrode, and a separator disposed between the positive electrode and the negative electrode, and the electrode assembly is accommodated in a case with an electrolyte. The positive electrode is able to provide lithium ions, and the lithium ions may pass through a separator made of a porous material and move to the negative electrode. The negative electrode may be a carbon-based active material that has an electrochemical reaction potential close to that of lithium metal and is capable of inserting and removing lithium ions.

### DISCLOSURE

### Technical Problem

The present disclosure provides a separator for an electrochemical device that uses a positive electrode active material containing a transition metal such as manganese, and is capable of adsorbing transition metal ions eluted from the positive electrode.

### Technical Solution

According to an aspect, the present disclosure provides a separator for an electrochemical device, including a porous polymer substrate, and a porous coating layer including a first polymer binder and inorganic particles and formed on at least one surface of the porous polymer substrate. The first polymer binder and the inorganic particles each have different ligands introduced thereto. The first polymer binder and the inorganic particles form a coordination bond to a single metal ion.

The first polymer binder and the inorganic particles may be each independently chemically bonded to one or more ligands selected from the group consisting of a first ligand having a single denticity and a second ligand having two or more denticities.

The first ligand may be at least one selected from the group consisting of imidazole, pyrazole, triazole, tetrazole, indazole, benzimidazole, azaindole, purine, and derivatives thereof.

The second ligand may be at least one selected from the group consisting of nitrilotriacetic acid, iminodiacetic acid, ethylenediamine tetraacetic acid, 1,2-cyclohexanediaminetetraacetic acid, and derivatives thereof.

The inorganic particles may have the second ligand chemically bonded to a surface thereof.

The inorganic particles may be included in 40% by weight to 80% by weight based on the total weight of the porous coating layer.

The porous coating layer further includes a second polymer binder, and a content of the first polymer binder is greater than or equal to a content of the second polymer binder.

According to another aspect of the present disclosure, there is provided an electrochemical device including a positive electrode, a negative electrode, and a separator disposed between the positive electrode and the negative electrode, in which the separator is a separator for an electrochemical device of the one aspect described above.

The electrochemical device may be a lithium secondary battery.

The metal ions may be generated during charging and discharging of the electrochemical device.

The metal ions may be transition metal ions derived from the positive electrode.

According to another aspect, the present disclosure provides an electrical device including the electrochemical device.

According to yet another aspect, the present disclosure provides a method of manufacturing a separator for an electrochemical device, including forming a porous coating layer including a first polymer binder and inorganic particles on at least one surface of a porous polymer substrate, in which the first polymer binder and the inorganic particles each have different ligands introduced thereto.

The step of forming the porous coating layer may include preparing a coating slurry containing the first polymer binder, the inorganic particles, and a dispersion medium, and applying the coating slurry to at least one surface of the porous polymer substrate.

The coating slurry may further contain a second polymer binder.

The step of forming the porous coating layer may further include performing a corona discharge treatment on at least one surface of the porous polymer substrate before applying the coating slurry to the at least one surface of the porous polymer substrate.

The step of forming the porous coating layer may include drying the coating slurry applied to the at least one surface of the porous polymer substrate and evaporating the dispersion medium.

### Advantageous Effects

The separator for an electrochemical device according to the present disclosure prevents performance degradation caused by precipitation of impurities in the electrochemical device by adsorbing metal ions generated during charging and discharging.

### Best Mode

Hereinafter, with reference to the accompanying drawings, embodiments of the present disclosure will be described in detail to facilitate the practicing by one of ordinary skill in the art to which the present disclosure belongs. The present disclosure may be implemented in various different forms, and is not limited or restricted by the embodiments described herein below.

As used herein, the term "including" is used to list materials, compositions, devices, and methods useful in the present disclosure and is not limited to the listed examples.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

As used herein, the term "electrochemical device" may refer to a primary battery, a secondary battery, or a supercapacitor.

The positive electrode active material of the lithium secondary battery may contain lithium and various metal or transition metal elements. For example, nickel may improve the capacity of electrochemical devices, cobalt may improve the capacity and cycle stability of electrochemical devices, manganese may improve the stability of electrochemical devices, and aluminum may improve the output characteristics of the electrochemical devices. That is, electrochemical devices with higher energy density and stability have adopted the transition metals to improve various characteristics of the devices. For example, lithium-manganese-based positive electrode active materials containing manganese have been attracting attention due to their superior thermal stability compared to nickel-based active materials, and their cost competitiveness compared to nickel or cobalt-based active materials.

In an electrochemical device using a positive electrode active material containing a transition metal such as manganese, transition metal ions may be eluted from the positive electrode during the charging and discharging process. The eluted transition metal ions may migrate to the negative electrode and precipitate as impurities on the surface of the negative electrode or form an uneven film, thereby causing capacity degradation of the electrochemical device.

Therefore, as a separator for use in the electrochemical device including the positive electrode active material containing a transition metal such as manganese, there is provided a separator capable of capturing transition metal ions eluted from the positive electrode and preventing their migration to the negative electrode, thereby preventing deterioration of the negative electrode and the electrochemical device.

According to an embodiment, the present disclosure provides a separator for an electrochemical device, including a porous polymer substrate, and a porous coating layer including a first polymer binder and inorganic particles and formed on at least one surface of the porous polymer substrate. The first polymer binder and the inorganic particles each have different ligands introduced thereto. The first polymer binder and the inorganic particles form a coordination bond to a single metal ion.

The porous polymer substrate may be a porous membrane having a plurality of pores, which electrically insulates the positive electrode and negative electrode to prevent short circuit. For example, when the electrochemical device is a lithium secondary battery, the porous polymer substrate may be an ion conductive barrier that allows lithium ions to pass through while blocking electrical contact between the positive electrode and the negative electrode. At least a portion of the pores may form a three-dimensional network communicating with the surface and interior of the porous polymer substrate, and fluid may pass through the porous polymer substrate through the pores.

The porous polymer substrate may be a material that is physically and chemically stable to an electrolyte that is an organic solvent. Examples of the porous polymer substrate include resins, for example, polyolefins such as polyethylene, polypropylene, and polybutylene, polyvinyl chloride, polyethylene terephthalate, polycycloolefins, polyethersulfone, polyamides, polyimides, polyimidamides, nylon, polytetrafluoroethylene, and copolymers or mixtures thereof, but not limited thereto. Preferably, polyolefin-based resins may be used. The polyolefin-based resins are suitable for manufacturing electrochemical devices with higher energy density because they may be processed to relatively small thicknesses and are easy to apply coating slurries.

The porous polymer substrate may have a monolayer or multilayer structure. The porous polymer substrate may include two or more polymer resin layers having different melting points (Tm) to provide shutdown capability during high temperature runaway of the battery. For example, the porous polymeric substrate may include a polypropylene layer having a relatively high melting point and a polyethylene layer having a relatively low melting point. For example, the porous polymer substrate may be a three-layer structure in which polypropylene, polyethylene, and polypropylene are laminated in this order. As the temperature of the battery rises above a predetermined temperature, the polyethylene layer melts and shuts down the pores, thereby preventing thermal runaway of the battery.

The thickness of the porous polymer substrate may be approximately 1 µm or more and 100 µm or less. For example, the thickness of the porous polymer substrate may be approximately 10 µm or more and 90 µm or less, 20 µm or more and 80 µm or less, 30 µm or more and 70 µm or less, or 40 µm or more and 60 µm or less. For example, the thickness of the polymer substrate may be approximately 1 µm or more and 30 µm or less. As a further example, the thickness of the polymer substrate may be approximately 5 µm or more and 15 µm or less, or 8 µm or more and 13 µm or less. When the thickness of the porous polymer substrate is adjusted within the above-mentioned range, the amount of the active material included in the electrochemical device may be increased by minimizing the volume of the electrochemical device while electrically insulating the positive electrode and the negative electrode.

The porous polymer substrate may contain pores, for example, of shapes, such as rounded, circular, and oval, having an average diameter of approximately 0.01 µm or more and 1 µm or less. For example, the size of the pores contained in the porous polymer substrate may be approximately 0.01 µm or more and 0.09 µm or less, approximately 0.02 µm or more and 0.08 µm or less, approximately 0.03 µm or more and 0.07 µm or less, or approximately 0.04 µm or more and 0.06 µm or less. According to an embodiment, the size of the pores may be approximately 0.02 µm or more and 0.06 µm or less. When the pore size of the porous polymer substrate is adjusted within the above-mentioned range, the permeability and ionic conductivity of the entire prepared separator may be controlled.

The porous polymer substrate may have a permeability of approximately 10 s/100 cc or more and 100 s/100 cc or less. For example, the porous polymer substrate may have a permeability of approximately 10 s/100 cc or more and 90 s/100 cc or less, 20 s/100 cc or more and 80 s/100 cc or less, 30 s/100 cc or more and 70 s/100 cc or less, or 40 s/100 cc or more and 60 s/100 cc or less. For example, the permeability of the porous polymer substrate may be approximately 50 s/100 cc or more and 70 s/100 cc or less. When the permeability of the porous polymer substrate is within the above-mentioned range, the permeability of the prepared separator may be provided in a range suitable for securing the output and cycle characteristics of the electrochemical device.

The permeability (s/100 cc) means a time (in seconds) it takes for 100 cc of air to pass through a predetermined area of a porous polymer substrate or a separator under constant pressure. The permeability may be measured using a Gurley densometer in accordance with ASTM D 726-58, ASTM D726-94, or JIS-P8117. For example, a 4110N instrument from Gurley may be used to measure the time for 100 cc of air to pass through a sample of 1 square inch (or 6.54 cm²) under a pressure of 0.304 kPa of air or 1.215 kN/m² of water. For example, the ASAHI SEIKO EG01-55-1MR instrument may be used to measure the time for 100 cc of air to pass through a sample of 1 square inch under a constant pressure of 4.8 inches of water at room temperature.

The porous polymer substrate may have a porosity of approximately 10 vol% or more and 60 vol% or less. For example, the porosity of the porous polymer substrate may be approximately 15 vol% or more and 55 vol% or less, 20 vol% or more and 50 vol% or less, 25 vol% or more and 45 vol% or less, or 30 vol% or more and 40 vol% or less. For example, the porosity of the porous polymer substrate may be approximately 30 vol% or more and 50 vol% or less. When the porosity of the porous polymer substrate is within the above-mentioned range, the ionic conductivity of the prepared separator may be provided in a range suitable for securing the output and cycle characteristics of the electrochemical device.

The porosity refers to a ratio of a volume of pores to the total volume of the porous polymer substrate. The porosity may be measured by a method known in the art. For example, the porosity may be measured by Brunauer Emmett Teller (BET) measurement using adsorption of nitrogen gas, capillary flow porometer, or water or mercury infiltration method.

The porous coating layer is formed on at least one side of the porous polymer substrate, and includes a first polymer binder and inorganic particles. The first polymer binder and the inorganic particles may each have different ligands introduced thereto. The expression "introduction" of a ligand into the first polymer binder or the inorganic particles means that the ligand is chemically bound to the polymer binder or the inorganic particles. To the extent that the coordination binding ability of the ligand to the metal ion is maintained, the method of chemical coupling of the ligand is not limited, and any method known in the art may be used. The first polymer binder may be one in which a ligand is chemically bonded through a predetermined portion of repeating units. The inorganic particle may be chemically bonded to the ligand through a functional group exposed on the surface of the particle, or may form a chemical bond with the ligand through a predetermined functional group after the surface of the inorganic particle is modified with the functional group.

The first polymer binder and the inorganic particles may include different ligands, and each may form a coordination bond to a metal ion or a coordination bond to a single metal ion. For example, the first polymer binder and the inorganic particles simultaneously form a coordination bond to a single metal ion. For example, one first polymer binder and one or more inorganic particles may simultaneously form a coordination bond to one metal ion. A porous coating layer capable of forming a coordination bond to a single metal ion may easily form a complex with a metal ion and maintain a stable structure even after complex formation.

The first polymer binder and the inorganic particles may be each independently chemically bonded to one or more ligands selected from the group consisting of a first ligand having a single denticity and a second ligand having two or more denticities. For example, the first ligand having one denticity and the second ligand having two denticities may simultaneously form a coordination bond to a single metal ion. The first ligand and the second ligand may each independently be chemically bonded to one or more of the first polymer binder and the inorganic particles. Preferably, the first polymer binder may be chemically bonded to the first ligand, and the inorganic particle may be chemically bonded to the second ligand, or vice versa.

The first ligand may be at least one selected from the group consisting of imidazole, pyrazole, triazole, tetrazole, indazole, benzimidazole, azaindole, purine, and derivatives thereof. The first ligand may include an aromatic heterocycle and form a coordination bond with a metal ion at one position. The type of the derivative is not limited as long as the derivative can form a coordination bond with a metal ion and a chemical bond with the first polymer binder or inorganic particles. For example, the first ligand may be imidazole or a derivative thereof.

The second ligand may be at least one selected from the group consisting of nitrilotriacetic acid (NTA), iminodiacetic acid (IDA), ethylenediaminetetraacetic acid (EDTA), 1,2-cyclohexanediamine-N,N,N',N'-tetraacetic acid, and derivatives thereof. The second ligand may be acetic acid, and may include two or more carboxyl groups to form a coordination bond with a metal ion at two or more positions. The type of the derivative is not limited as long as the derivative can form a coordination bond with a metal ion and a chemical bond with the first polymer binder or inorganic particles. Preferably, the second ligand may be selected from nitrilotriacetic acid, iminodiacetic acid, or derivatives thereof.

For example, the first polymer binder may be chemically bonded to the first ligand, and the inorganic particle may be chemically bonded to the second ligand. The second ligand may be less stable in the electrochemical device than the first ligand. The second ligand may have side reactions with the electrolyte in the electrochemical device. Thus, the second ligand is, for example, typically bound to the surface of the inorganic particles rather than to the first polymeric binder, which may be dissolved or swollen by the electrolyte, to maintain the adsorption capacity of the metal ions.

According to one embodiment, the first polymer binder may include nitrilotriacetic acid as a ligand, and the inorganic particle may include imidazole as a ligand. Metal ions may be included in the electrochemical device and may be generated during the charging and discharging process of the electrochemical device. For example, the metal ions may be transition metal ions derived from the positive electrode. For example, the metal ion may be a transition metal divalent ion such as manganese, nickel, or cobalt that is eluted from the positive electrode active material. The divalent ion may be coordinated to six positions per ion by one nitrilotriacetic acid and two imidazoles. The metal ion is coordinated by the first polymer binder and the inorganic particles to form a complex, so that its migration to the negative electrode and side reactions with the electrolyte solution may be suppressed.

The porous coating layer may further contain a second polymer binder. The second polymer binder does not contain a ligand. The first polymer binder and the second polymer binder may bind the inorganic particles included in the porous coating layer and provide adhesion to the porous coating layer. The first polymer binder contains the above-described ligand and is used to adsorb metal ions, so that the adhesive force may be lower than that of the second polymer binder. The second polymer binder may provide the safety of the separator by maintaining stable adhesion of the porous coating layer to the porous polymer substrate. For example, the content of the first polymer binder may be greater than or equal to the content of the second polymer binder. For example, the first polymer binder and the second polymer binder may be included in a weight ratio of approximately 7:3 to 5:5. When the content of the polymer binder is adjusted within the above-mentioned range, it is possible to form a porous coating layer having good adsorption of metal ions and stable adhesion to a porous substrate.

The first polymer binder and the second polymer binder may be selected from an acrylic polymer binder, a fluorine-based polymer binder, or a combination thereof. Preferably, the first polymer binder may be an acrylic polymer, and the second polymer binder may be a fluorine-based polymer binder.

The acrylic polymer binder may have a repeating unit including one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile, butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-octyl(meth)acrylate, isooctyl(meth)acrylate, isononyl(meth)acrylate, lauryl(meth)acrylate, tetradecyl(meth)acrylate, and pentafluorophenylacrylate.

For example, the acrylic polymer binder may include one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber, and acrylonitrile-butadiene-styrene rubber.

The fluorine-based polymer binder may be polyvinylidene fluoride-based. For example, the fluorine-based polymer binder may be one or more selected from the group consisting of polyvinylidene fluoride, polyhexafluoropropylene, polytetrafluoroethylene, and polyvinylidene fluoride-hexafluoropropylene (PVDF-HFP), polyvinylidene fluoride-trichloroethylene (PVDF-TCE), and polyvinylidene fluoride-chlorotrifluoroethylene (PVDF-CTFE), and more particularly, may be a copolymer containing polyvinylidene fluoride.

At least one of the first polymer binder and the second polymer binder may be in the form of particles. For example, the polymer binder may have a spherical or oval shape, but is not limited thereto. The polymer binder may have an average particle diameter (D50) of approximately 100 nm or more and 2,000 nm or less. For example, the polymer binder may have an average particle diameter (D50) of approximately 200 nm to 1,000 nm or 300 nm to 800 nm. When the particle size of the polymer binder particles is adjusted within the above-mentioned range, the migration path of lithium ions and the adhesion of the porous coating layer to the porous substrate may be secured at the same time.

The weight average molecular weight (Mw) of the first polymer binder and the second polymer binder may be approximately 40,000 or more and 500,000 or less. For example, the weight average molecular weight of the polymer binders may be approximately 50,000 or more and 450,000 or less, 100,000 or more and 400,000 or less, 150,000 or more and 350,000 or less, or 200,000 or more and 300,000 or less. For example, the weight average molecular weight of the first polymer binder may be approximately 40,000 to 100,000, and the weight average molecular weight of the second polymer binder may be approximately 40,000 to 200,000. When the weight average molecular weight of the polymer binder is adjusted within the above-mentioned range, the polymer binder is uniformly dispersed to form a porous coating layer that simultaneously implements adsorption ability for metal ions and adhesion ability to the porous polymer substrate.

In the present disclosure, the weight average molecular weight of the polymer binder may be measured by gel permeation chromatography (GPC) (PL GPC220, Agilent Technologies). For example, the weight average molecular weight may be determined by using trichlorobenzene (TCB) as a solvent in a PL Olexis (Polymer Laboratories) column (column temperature: 160 °C), and using an Agilent High Temperature RI detector under the conditions of sample concentration of 1.0 mg/mL, flow rate of 1.0 mL/min, and injection volume of 200 µl (corrected using a cubic function, reference: Polystyrene).

The porous coating layer may include approximately 40% by weight to 80% by weight of the inorganic particles based on the total weight of the porous coating layer. For example, the content of the inorganic particles may be approximately 45% by weight or more and 75% by weight or less, 50% by weight or more and 70% by weight or less, or 55% by weight or more and 65% by weight or less based on the total weight of the porous coating layer. For example, the content of the inorganic particles may be approximately 60% by weight or more and 80% by weight or less based on the total weight of the porous coating layer. The porous coating layer containing inorganic particles in the above-mentioned range may reduce heat shrinkage of the porous polymer substrate and prevent short circuiting of the electrode due to shrinkage of the separator.

The inorganic particles may be electrochemically stable. The inorganic particles are not particularly limited as long as oxidation and/or reduction reactions do not occur in the operating voltage range of the electrochemical device (e.g., 0 to 5 V based on Li/Li⁺). For example, the use of inorganic particles having a high permittivity may contribute to an increase in the dissociation of electrolyte salts, such as lithium salts, in the liquid electrolyte, thereby improving the ionic conductivity of the electrolyte. For the reasons described above, the inorganic particles may include high-permittivity inorganic particles having a dielectric constant of 5 or more, and for example, 10 or more. Non-limiting examples of inorganic particles having a dielectric constant of 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, and mixtures thereof.

Further, inorganic particles having a lithium ion transfer capacity, that is, inorganic particles that contain the element lithium but do not store lithium and have an ability to transfer lithium ions, may be used as the inorganic particles. Non-limiting examples of the inorganic particles having a lithium ion transfer capability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture of two or more thereof.

Further, inorganic particles having flame retardancy may be used to impart flame retardant properties to the separator, or to prevent the temperature inside the electrochemical element from rising rapidly. Non-limiting examples of the inorganic particles having flame retardancy include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof.

The average particle diameter (D50) of the inorganic particles may be approximately 10 nm or more and 10,000 nm or less. For example, the average particle diameter (D50) of the inorganic particles may be approximately 100 nm or more and 9,000 nm or less, 1,000 nm or more and 8,000 nm or less, 2,000 nm or more and 7,000 nm or less, 3,000 nm or more and 6,000 nm or less, or 4,000 nm or more and 5,000 nm or less. For example, the average particle diameter of the inorganic particles may be approximately 100 nm or more and 700 nm or less. When the average particle diameter of the inorganic particles is less than 10 nm, an additional polymer binder for bonding between the inorganic particles is required as the specific surface area increases, which is disadvantageous in terms of electrical resistance. When the average particle diameter of the inorganic particles exceeds 10,000 nm, the uniformity of the surface of the coating layer may decrease and damage to the porous polymer substrate or electrode may occur during lamination.

The porous coating layer may be formed by coating at least one surface of the porous polymer substrate with a coating slurry containing the first polymer binder, the inorganic particles, and a dispersion medium. The coating slurry may further contain a second polymer binder. For example, the separator may be prepared by applying the coating slurry to at least one side of the porous polymer substrate, followed by drying to remove the dispersion medium. The porous coating layer may have a porous structure including an interstitial volume in which the inorganic particles are connected by the first polymer binder or the first polymer binder and the second polymer binder. The porous coating layer adheres to the porous polymer substrate while allowing lithium ions to pass therethrough, thereby preventing heat shrinkage of the porous polymer substrate.

The coating slurry may contain a dispersion medium to dissolve or disperse at least a portion of the polymer binders, and disperse the inorganic particles. The coating slurry may be used in which the inorganic particles are uniformly dispersed by controlling the type and content of the dispersion medium. Examples of the dispersion medium include water, ethanol, acetone, isopropyl alcohol (IPA), dimethylacetamide (DMAc), dimethylformamide (DMF), N-methyl-2-pyrrolidone (NMP), acetonitrile (acetonitrile), and combinations thereof. The above-described type of dispersion medium may be used to form a porous coating layer in which the inorganic particles are uniformly dispersed.

The coating slurry may have a viscosity of approximately 100 cps or more and 1,000 cps or less. For example, the viscosity of the coating slurry may be approximately 200 cps or more and 900 cps or less, 300 cps or more and 800 cps or less, 400 cps or more and 700 cps or less, or 500 cps or more and 600 cps or less. For example, the viscosity of the coating slurry may be approximately 300 cps or more and 800 cps or less. When the viscosity of the coating slurry exceeds 1,000 cps, a slurry with a very large particle size (D99) is formed (D99 ~100 µm), which makes it difficult to manufacture a separator through continuous application on a porous polymer substrate, so that it is difficult to secure productivity.

The coating slurry may further include additives such as dispersants, surfactants, anti-foaming agents, flame retardants, and wetting agents to improve dispersibility and flame retardancy and improve the uniformity of the formed porous coating layer. Examples of the dispersant include one or more selected from the group consisting of oil-soluble polyamines, oil-soluble amine compounds, fatty acids, fatty alcohols, sorbitan fatty acid esters, tannic acid, pyrogallic acid, and polyacrylic acid. By using the above-described type of dispersant, it is possible to improve the stability of the coating slurry, and secure the uniformity of the porous coating layer formed from the coating slurry.

The additive may be contained in an amount of 0% by weight or more and 5% by weight or less based on the total weight of the coating slurry. For example, the content of the additive may be approximately 0.01% by weight or more and 4% by weight or less, 0.1% by weight or more and 3% by weight or less, or 1% by weight or more and 2% by weight or less. For example, the content of the additive may be approximately 3% by weight or more and 5% by weight or less. When the content of the additive is adjusted within the above-mentioned range, uniform dispersion and stability of the inorganic particles contained in the coating slurry may be achieved.

The dispersion medium contained in the coating slurry may be removed by drying or heating after the formation of the porous coating layer. For example, the porous coating layer may contain about 5 ppm or less of the dispersion medium. For example, the porous coating layer may be composed of the first polymer binder and the inorganic particles, or the first polymer binder, the second polymer binder, and the inorganic particles. In the process of removing the dispersion medium, a plurality of pores may be formed on the surface and inside the porous coating layer. The pores may include interstitial volumes formed between the inorganic particles, and may have a structure in which a three-dimensional network is formed to allow fluid to pass therethrough.

The thickness of the porous coating layer may be approximately 1 µm or more and 15 µm or less. For example, the thickness of the porous coating layer may be approximately 2 µm or more and 14 µm or less, 3 µm or more and 13 µm or less, 4 µm or more and 12 µm or less, 5 µm or more and 11 µm or less, 6 µm or more and 10 µm or less, or 7 µm or more and 9 µm or less. For example, the thickness of the porous coating layer may be approximately 1 µm or more and 5 µm or less. When the thickness of the porous coating layer is adjusted within the above-mentioned range, it is possible to minimize shrinkage of the porous polymer substrate and achieve stable adhesion to the porous polymer substrate.

The separator for the electrochemical device may have a permeability of approximately 50 s/100 cc or more and 150 s/100 cc or less. For example, the separator may have a permeability of 60 s/ 100 cc or more and 140 s/100 cc or less, 70 s/100 cc or more and 130 s/100 cc or less, 80 s/100 cc or more and 120 s/100 cc or less, or 90 s/100 cc or more and 110 s/100 cc or less. For example, the permeability of the separator may be approximately 100 s/100 cc or more and 120 s/100 cc or less. When the permeability of the separator is within the above-mentioned range, the output, stability, and cycle characteristics of the electrochemical device may be secured.

According to another embodiment of the present disclosure, an electrochemical device includes a positive electrode, a negative electrode, and a separator interposed between the positive electrode and the negative electrode, in which the separator is the separator of the above-described embodiment. The electrochemical device may be manufactured by inserting an electrode assembly including a positive electrode, a negative electrode, and a separator interposed between the positive electrode and the negative electrode into a case or pouch, and sealing the case or pouch. Before sealing the case or pouch, the electrode assembly may be impregnated with the electrolyte solution by injecting the electrolyte solution. The shape of the case or pouch is not limited. For example, the electrochemical device may be a cylindrical, prismatic, coin-shaped, or pouch-shaped lithium secondary battery.

The positive electrode and the negative electrode may be coated by applying and drying an electrode active material on at least one surface of each collector. The collector may be a material that has conductivity without causing chemical changes in the electrochemical device. Examples of the collector for the positive electrode include aluminum, nickel, titanium, fired carbon, and stainless steel; and aluminum or stainless steel which is subjected to surface treatment with carbon, nickel, titanium, or silver, but not limited thereto. Examples of the collector for the negative electrode include copper, nickel, titanium, fired carbon, and stainless steel; and copper or stainless steel which is subjected to surface treatment with carbon, nickel, titanium, or silver, but not limited thereto. The collector may be in various forms, such as a thin metal plate, film, foil, net, porous material, or foam.

The positive electrode includes a positive electrode collector and a positive electrode active material layer containing a positive electrode active material, a conductive material, and a binder resin on at least one surface of the collector. The positive electrode active material includes layered compounds such as lithium manganese composite oxide (*e.g*., LiMn₂O₄ and LiMnO₂), lithium cobalt oxide (LiCoO₂), and lithium nickel oxide (LiNiO₂), or a compound substituted with one or more transition metal elements; lithium manganese oxides represented by the formulas Li₁₊ₓMn₂₋ₓO₄ (where x is 0 to 0.33), LiMnO₃, LiMn₂O₃, or LiMnO₂; lithium copper oxide (Li₂CuO₂); vanadium oxides such as LiV₃O₈, LiV₃O₄, V₂O₅, Cu₂V₂O₇; Ni-site type lithium nickel oxides represented by the formula LiNi₁₋ₓMₓO₂ (where M = Co, Mn, Al, Cu, Fe, Mg, B, or Ga, and x = 0.01 to 0.3); lithium manganese complex oxides represented by the formula LiMn₁₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); LiMn₂O₄ in which some of Li in the formula is replaced with an alkaline earth metal ion; disulfide compounds; Fe₂(MoO₄)₃, which may be used alone or in mixture of two or more thereof. For example, the positive electrode active material may contain one or more transition metal elements.

The negative electrode includes a negative electrode collector and a negative electrode active material layer containing a negative electrode active material, a conductive material, and a binder resin on at least one surface of the collector. The negative electrode active material in the negative electrode includes carbon such as lithium metal oxide, hard carbon, and graphitic carbon; silicon-based materials such as LixFe₂O₃ (0≤x≤1), LiₓWO₂ (0≤x≤1), Si, SiOₓ (0<x<2), SiC, and Si alloy; metal complex oxides such as SnₓMe₁₋ₓMe'_{y}O_{z} (Me: Mn, Fe, Pb, Ge; Me': Al, B, P, Si, elements of groups 1, 2, and 3 of the periodic table, halogen; 0<x<1; 1≤y ≤3; 1≤z≤8); lithium metal; lithium alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxide, which may be used alone or in mixture of two or more thereof.

The conductive material may be any one or a mixture of two or more conductive materials selected from the group consisting of graphite, carbon black, carbon fiber or metal fiber, metal powder, conductive whisker, conductive metal oxide, carbon nanotube, activated carbon, and polyphenylene derivative. The carbon nanotube has a graphite sheet in a shape of a cylinder having a nano-sized diameter and a sp² bond structure, and exhibits conductor or semiconductor characteristics according to the angle and structure at which the graphite sheet is rolled. The carbon nanotube may be categorized as a single-walled carbon nanotube (SWCNT), a double-walled carbon nanotube (DWCNT), and a multi-walled carbon nanotube (MWCNT) based on the number of bonds that make up their walls, and the carbon nanotube may be appropriately selected based on the application of the dispersion. For example, the conductive material may be one selected from the group consisting of natural graphite, artificial graphite, super-p, acetylene black, Ketjen black, channel black, furnace black, lamp black, summer black, Denka black, aluminum powder, nickel powder, zinc oxide, potassium titanate, and titanium oxide, or a mixture of two or more thereof.

The binder resin that may be used herein may be any binder resin commonly used for electrodes of electrochemical devices. Non-limiting examples of the binder resin include polyvinylidene fluoride-co-hexafluoropropylene, polyvinylidene fluoride-co-trichloroethylene, poly(methyl methacrylate), poly(ethylhexyl acrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, but is not limited thereto.

The electrolyte may be obtained by dissolving or dissociating a salt with a structure such as A⁺B⁻, in which A⁺ includes an alkali metal cation such as Li⁺, Na⁺, or K⁺, or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination thereof, in an organic solvent such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), γ-butyrolactone, or a mixture thereof.

The electrochemical device including the electrode assembly may be a lithium secondary battery. The battery may be used as a unit cell, and may be used as a battery module including the unit cell, and a battery pack including the battery module. The battery pack may be used as a power source for various electrical devices. Examples of the device include small devices such as computers, mobile phones, and power tools; electric cars, including electric vehicles (EVs), hybrid electric vehicles (HEVs), and plug-in hybrid electric vehicles (PHEVs) powered by electric motors; electric two-wheeled vehicles, including electric bicycles (E-bikes) and electric scooters (E-scooters); electric golf carts; and medium to large devices such as power storage systems, but not limited thereto.

Another embodiment of the present invention provides a method for preparing a separator for an electrochemical device, including forming a porous coating layer containing a first polymer binder and inorganic particles on at least one surface of a porous polymer substrate. Contents that overlap with the contents described in the separator for the electrochemical device is replaced with the explanation of the preceding embodiment.

The step of forming the porous coating layer may include preparing a coating slurry containing the first polymer binder, the inorganic particles, and a dispersion medium, and applying the coating slurry to at least one surface of the porous polymer substrate, followed by drying. The first polymer binder and the inorganic particles may each have different ligands introduced thereto. The coating slurry may further contain a second polymer binder in which no ligand is introduced.

The step of forming the porous coating layer may further include performing a corona discharge treatment on at least one surface of the porous polymer substrate before applying the coating slurry to the porous polymer substrate. The step of performing the corona discharge treatment on at least one surface of the porous polymer substrate may prevent a decrease in the binding force between the surface of the porous polymer substrate and the surface of the coating layer at a high temperature, and prevent the binding force between the surface of the polymer substrate and the surface of the coating layer from being lowered by the electrolyte.

The corona discharge treatment may be performed on at least one surface of the porous polymer substrate at a voltage of approximately 0.1 kV or more and 10 kV or less in air. For example, the corona discharge treatment may be performed at a voltage of 0.2 kV or more and 9 kV or less, 0.3 kV or more and 8 kV or less, 0.4 kV or more and 7 kV or less, 0.5 kV or more and 6 kV or less, 0.6 kV or more and 5 kV or less, 0.7 kV or more and 4 kV or less, 0.8 kV or more and 3 kV or less, 0.9 kV or more and 2 kV or less, or 1.0 kV or more and 2 kV or less. Preferably, the corona discharge treatment may be performed at a voltage of 1.8 kV in air. When the applied voltage of the corona discharge treatment is adjusted within the above-mentioned range, an appropriate number of functional groups may be formed on the surface of the polymer substrate, and damage to the surface of the polymer substrate is typically prevented.

The step of forming the porous coating layer may include applying the coating slurry to the porous polymer substrate to form a coating. For example, the coating may be formed by, but not limited to, a bar coater, a wire bar coater, a roll coater, a spray coater, a spin coater, an inkjet coater, a screen coater, a reverse coater, a gravure coater, a knife coater, a slot die coater, a hot melt coater, a comma coater, and a direct metering coater. Preferably, the step of forming the porous coating layer may include simultaneously coating both surfaces of the porous polymeric substrate with the coating slurry using a bar coater or a slot die coater.

The step of forming the porous coating layer may including applying the coating slurry to the porous polymer substrate, followed by drying or heating the coating layer to evaporate the dispersion medium contained in the coating layer. The removal of the dispersion medium may be performed at a temperature capable of evaporating only the dispersion medium contained in the coating layer without modifying the polymer binder contained in the coating layer. For example, the removal of the dispersion medium may be implemented by heating the coating layer to a predetermined temperature, but ensuring that the temperature of the surface of the coating layer does not exceed 60 °C. When heating the coating layer under the above conditions, the thermal energy may be used first to heat the dispersion medium and change the phase, and may not be used to modify the polymer binder.

Hereinafter, the present disclosure will be described in more detail with reference to specific examples and experimental examples. The following examples and experimental examples are only illustrative of the present disclosure, and the present disclosure is not limited to the following examples and experimental examples.

### Example 1

### Preparation of Coating Slurry

The first polymer binder was prepared by introducing nitrilotriacetic acid (NTA) as a ligand into an acrylate-based polymer binder. Specifically, 11 g of pentafluorophenyl acrylate (PFA) was dissolved in 200 mL of anhydrous dimethylformamide (DMF) at room temperature (25 °C), and then mixed with a solution of 12 g of amine-substituted nitrilotriacetic acid (NH₂(CH₂)₄NTA) dissolved in 10 mL of distilled water. An additional 210 mL of triethylamine (TEA) was added to the mixed solution, and then heated at 50 °C for 6 hours. The mixed solution was dialyzed in distilled water to remove dimethylformamide, and dried in a vacuum oven at 40 °C for 1 hour to yield 8.5 g of the first polymer binder containing nitrilotriacetic acid (weight average molecular weight: 58,000).

The second polymer binder used here was commercially available polyvinylidene fluoride-hexafluoropropylene (weight average molecular weight: 100,000, HFP substitution degree 10%).

N-(3-triethoxysilylpropyl)-4,5-dihydroimidazole and tetraethyl orthosilicate (TEOS) were introduced into ethanol and condensed under hydrochloric acid and sodium chloride catalysts, respectively, to oligomerize. The oligomerized silanes were then mixed and co-condensed under triethylamine catalysis to obtain gel-like imidazole-substituted silica particles. The gel was washed with water and ethanol in this order using a centrifuge, and then dried in a vacuum oven at 40 °C for 24 hours to yield imidazole-introduced silica (average particle diameter (D50): 500 nm) in a solid state.

At room temperature (25 °C), 15.2 g of the first polymer binder (acrylic binder into which NTA was introduced), 15.2 g of the second polymer binder (PVDF-HFP), 26.9 g of the inorganic particles (silica into which imidazole was introduced), and 0.76 g of PAA as an additive were added to 124 mL of NMP, and stirred with a shaker for 60 minutes to prepare a coating slurry.

### Preparation of Porous Polymer Substrate

As a porous polymer substrate, a polyethylene film (MI: 0.2 g/10 min, Tm: 135 °C, porosity: 45%, average pore size: 45 nm) with a size of 20 cm × 30 cm and a thickness of 9 µm was used.

### Preparation of Separator

The coating slurry was coated on both surfaces of a polyethylene film using a bar coater to form a coating layer having a thickness of 3 µm. (The composition of the porous coating layer is 20% by weight of the first polymer binder, 20% by weight of the second polymer binder, and 60% by weight of inorganic particles based on the total weight of the porous coating layer).

The process of applying a low-temperature airflow to the polyethylene film on which the coating layer was formed and removing the dispersion medium was repeated five times to prepare a separator with a total thickness of 15 µm.

### Example 2

### Preparation of Coating Slurry

As the first polymer binder, commercially available polyvinylimidazole (weight average molecular weight 100,000) was used.

As the second polymer binder, commercially available polyvinylidene fluoride-hexafluoropropylene was used as in Example 1.

The inorganic particles were prepared by introducing nitrilotriacetic acid as a ligand into silica. For example, 40.5 g of amine-substituted cationic silica gel and 33.5 g of nitrilotriacetic acid were added to 500 mL of pyridine to prepare a dispersion. The dispersion was stirred and reacted at 90 °C for 3 hours under a reflux system, then cooled to room temperature, and 0.5 M sodium bicarbonate was added to neutralize unreacted nitrilotriacetic acid. The reactant was washed with distilled water, ethanol, and diethyl ether in this order using a centrifuge, and then dried at room temperature for 24 hours to yield silica into which nitrilotriacetic acid was introduced (average particle diameter (D50): 700 nm) in a solid state.

At room temperature (25 °C), 15.2 g of the first polymer binder (polyvinylimidazole), 15.2 g of the second polymer binder (PVDF-HFP), 26.9 g of the inorganic particles (silica into which NTA was introduced), and 0.76 g of PAA as an additive were added to 124 mL of NMP, and stirred with a shaker for 60 minutes to prepare a coating slurry.

### Preparation of Separator

The same porous polymer substrate used in Example 1 was used, and a separator was prepared in the same manner as in Example 1.

### Comparative Example 1

A separator was prepared in the same manner as in Example 1, except that the NTA-introduced acrylic binder was used as the first polymer binder, PVDF-HFP was used as the second polymer binder, and the NTA-introduced silica was used as the inorganic particles in the preparation of the coating slurry. (The composition of the porous coating layer is 20% by weight of the first polymer binder, 20% by weight of the second polymer binder, and 60% by weight of inorganic particles based on the total weight of the porous coating layer).

### Comparative Example 2

A separator was prepared in the same manner as in Example 1, except that the polyvinylimidazole was used as the first polymer binder, PVDF-HFP was used as the second polymer binder, and the imidazole-introduced silica was used as the inorganic particles in the preparation of the coating slurry. (The composition of the porous coating layer is 20% by weight of the first polymer binder, 20% by weight of the second polymer binder, and 60% by weight of inorganic particles based on the total weight of the porous coating layer).

### Comparative Example 3

A separator was prepared in the same manner as in Example 1, except that the NTA-induced acrylic binder was used as the first polymer binder, PVDF-HFP was used as the second polymer binder, and silica was used as the inorganic particles in the preparation of the coating slurry. (The composition of the porous coating layer is 20% by weight of the first polymer binder, 20% by weight of the second polymer binder, and 60% by weight of inorganic particles based on the total weight of the porous coating layer).

### Comparative Example 4

A separator was prepared in the same manner as in Example 1, except that the polyvinylimidazole was used as the first polymer binder, PVDF-HFP was used as the second polymer binder, and the silica of Comparative Example 3 was used as the inorganic particles in the preparation of the coating slurry. (The composition of the porous coating layer is 20% by weight of the first polymer binder, 20% by weight of the second polymer binder, and 60% by weight of inorganic particles based on the total weight of the porous coating layer).

### Comparative Example 5

A separator was prepared in the same manner as in Example 1, except that polyvinylimidazole and the NTA-introduced acrylic binder were used as the first polymer binder, PVDF-HFP was used as the second polymer binder, and the Comparative Example 3 introduced silica was used as the inorganic particles in the preparation of the coating slurry. (The composition of the porous coating layer is 10% by weight of polyvinylimidazole, 10% by weight of NTA-introduced acrylic binder, 20% by weight of the second polymer binder, and 60% by weight of inorganic particles based on the total weight of the porous coating layer).

### Comparative Example 6

A separator was prepared in the same manner as in Example 1, except that the first polymer binder was not used, PVDF-HFP was used as the second polymer binder, and the NTA-introduced silica was used as the inorganic particles in the preparation of the coating slurry. (The composition of the porous coating layer is 40% by weight of the second polymer binder, and 60% by weight of inorganic particles based on the total weight of the porous coating layer).

### Comparative Example 7

A separator was prepared in the same manner as in Example 1, except that the first polymer binder was not used, PVDF-HFP was used as the second polymer binder, and the imidazole-introduced silica was used as the inorganic particles in the preparation of the coating slurry. (The composition of the porous coating layer is 40% by weight of the second polymer binder, and 60% by weight of inorganic particles based on the total weight of the porous coating layer).

### Comparative Example 8

A separator was prepared in the same manner as in Example 1, except that the first polymer binder was not used, PVDF-HFP was used as the second polymer binder, and the NTA-introduced silica and the imidazole-introduced silica were used as the inorganic particles in the preparation of the coating slurry. (The composition of the porous coating layer is 40% by weight of the second polymer binder, 30% by weight of the NTA-introduced silica, and 30% by weight of imidazole-introduced silica based on the total weight of the porous coating layer).

### Experimental Example. Determination of Properties of Separator

The properties of the separators prepared in Examples and Comparative Examples were confirmed and shown in Table 1 below.

### Measurement of Permeability

The permeability was measured using a Gurley densometer (Gurley, 4110N) to determine the time it takes for 100 cc of air to pass through a separator with a diameter of 28.6 mm and an area of 645 mm².

### Measurement of Battery Life Characteristics

The amounts of lithium manganese composite oxide: a conductive material (Denka black): a binder (PVdF) were weighed to be in the weight ratio of 95:2.5:2.5, added to N-methylpyrrolidone (NMP), and mixed to prepare a positive electrode active material slurry, which was then coated to a thickness of 200 µm on a 20 µm thick aluminum foil, followed by rolling and drying to prepare a positive electrode.

A Li metal plate with a thickness of 200 µm was used as a negative electrode, and the positive electrode and the negative electrode were stacked with the separator of Examples or Comparative Examples in between, and then inserted into an aluminum pouch.

An electrolyte in an amount of 1 g and containing 3 mol of vinylene carbonate (VC), 1.5 mol of propanesulfon (PS), 1 mol of ethylene sulfate (ESa), and 1 mol of lithium salt LiPF₆ as additives in a solvent mixed with ethylene carbonate (EC) and ethyl methyl carbonate (EMC) in a weight ratio of 3/7 is injected into the aluminum pouch, and the pouch was sealed to prepare a cell.

The prepared cell was subjected to a single charge and discharge at a speed of 0.1 C in the voltage range of 3.0 V to 4.4 V in a 25 °C chamber, followed by 300 cycles of charge and discharge each at a speed of 1.0 C to determine the life characteristics. The life characteristics were expressed as capacity retention rate by calculating the ratio of the discharge capacity after 300 cycles to the initial discharge capacity.

Further, the resistance was measured before and after the 300 cycles to confirm the resistance increase rate.

**[Table 1]**

| Example | Ligand to first polymer binder | Second polymer binder | Ligand to inorganic particles | Permeabilit y of separator (s/100 cc) | Capacity retention rate after 300 cycles (%) | Resistance increase rate after 300 cycles (%) |
|---|---|---|---|---|---|---|
| Example 1 | NTA | PVDF-HFP | imidazole | 94 | 95 | 3 |
| Example 2 | Imidazole | PVDF-HFP | NTA | 95 | 92 | 3 |
| Comparative Example 1 | NTA | PVDF-HFP | NTA | 89 | 92 | 6 |
| Comparative Example 2 | Imidazole | PVDF-HFP | Imidazole | 92 | 89 | 4 |
| Comparative Example 3 | NTA | PVDF-HFP | - | 91 | 80 | 21 |
| Comparative Example 4 | Imidazole | PVDF-HFP | - | 92 | 83 | 19 |
| Comparative Example 5 | NTA, Imidazole | PVDF-HFP | - | 89 | 83 | 19 |
| Comparative Example 6 | × | PVDF-HFP | NTA | 95 | 89 | 15 |
| Comparative Example 7 | × | PVDF-HFP | Imidazole | 93 | 86 | 16 |
| Comparative Example 8 | × | PVDF-HFP | NTA, Imidazole | 93 | 87 | 15 |

As illustrated in Table 1, for example, the capacity retention rate after 300 cycles was relatively higher in the Examples than the Comparative Examples, and the resistance increase rate after 300 cycles was relatively lower in the Examples than the Comparative Examples.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A separator for an electrochemical device, comprising:
a porous polymer substrate; and
a porous coating layer including a first polymer binder and inorganic particles and formed on at least one surface of the porous polymer substrate,
wherein the first polymer binder and the inorganic particles each have different ligands introduced thereto.

2. The separator according to claim 1, wherein the first polymer binder and the inorganic particles form a coordination bond to a single metal ion.

3. The separator according to claim 1, wherein the first polymer binder and the inorganic particles are each independently chemically bonded to one or more ligands selected from the group consisting of a first ligand having a single denticity and a second ligand having two or more denticities.

4. The separator according to claim 3, wherein the first ligand is at least one selected from the group consisting of imidazole, pyrazole, triazole, tetrazole, indazole, benzimidazole, azaindole, purine, and derivatives thereof.

5. The separator according to claim 3, wherein the second ligand is at least one selected from the group consisting of nitrilotriacetic acid, iminodiacetic acid, ethylenediamine tetraacetic acid, 1,2-cyclohexanediaminetetraacetic acid, and derivatives thereof.

6. The separator according to claim 5, wherein the inorganic particles have the second ligand chemically bonded to a surface thereof.

7. The separator according to claim 1, wherein the inorganic particles are included in 40% by weight to 80% by weight based on the total weight of the porous coating layer.

8. The separator according to claim 1, wherein the porous coating layer further includes a second polymer binder, and
a content of the first polymer binder is greater than or equal to a content of the second polymer binder.

9. An electrochemical device comprising:
positive electrode;
negative electrode; and
a separator disposed between the positive electrode and the negative electrode, wherein the separator is the separator for an electrochemical device of claim 1

10. The electrochemical device according to claim 9, wherein the metal ions are generated during charging and discharging of the electrochemical device.

11. The electrochemical device according to claim 10, wherein the metal ions are transition metal ions derived from the positive electrode.
